(19) Europäisches Patentamt European Patent Office Office européen des brevets

(11) **EP 3 656 132 B1**

(12) **EUROPÄISCHE PATENTSCHRIFT**

(45) Veröffentlichungstag und Bekanntmachung des Hinweises auf die Patenterteilung:
**21.04.2021 Patentblatt 2021/16**

(51) Int Cl.:
*H04Q 11/00* *(2006.01)* *H04B 10/27* *(2013.01)*
*H04L 12/933* *(2013.01)*

(21) Anmeldenummer: **18728584.6**

(22) Anmeldetag: **28.05.2018**

(86) Internationale Anmeldenummer:
**PCT/EP2018/063908**

(87) Internationale Veröffentlichungsnummer:
**WO 2019/197046 (17.10.2019 Gazette 2019/42)**

(54) **VERWENDUNG EINES FASEROPTISCHEN KREUZVERBINDUNGSSYSTEMS**

USE OF A FIBRE-OPTIC CROSS-CONNECTION SYSTEM

UTILISATION D'UN SYSTÈME DE CONNEXION CROISÉE À FIBRES OPTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2018 DE 102018002991**

(43) Veröffentlichungstag der Anmeldung:
**27.05.2020 Patentblatt 2020/22**

(73) Patentinhaber: **Lohmann, Ulrich**
**59069 Hamm (DE)**

(72) Erfinder: **Lohmann, Ulrich**
**59069 Hamm (DE)**

(74) Vertreter: **Schober, Mirko**
**Thielking & Elbertzhagen**
**Patentanwälte**
**Gadderbaumer Strasse 14**
**33602 Bielefeld (DE)**

(56) Entgegenhaltungen:
WO-A1-2017/013875 US-A1- 2010 254 703
US-A1- 2015 230 007 US-A1- 2015 295 655
US-A1- 2018 212 707 US-B1- 9 363 208

**Beschreibung**

TECHNISCHES GEBIET

Die Erfindung betrifft die Verwendung eines faseroptischen Kreuzverbindungssystems nach Anspruch 1.

STAND DER TECHNIK

Die Anwendung der Erfindung wird primär im Bereich der faseroptischen Verkabelungssysteme in Data Center gesehen, da hier ein Bedarf an strukturierter und skalierbarer Netzwerktechnologie mit inhärenter Redundanz für hohe Datenraten besteht. Gerade im Bereich der Router entwickelt sich, mit der sogenannten "Spine-Leaf-Topologie", ein Anwendungsgebiet für hoch-skalierbare faseroptische Kreuzverbindungen in redundanter Auslegung.

Es existieren im Rechenzentrum bereits eine Vielzahl von faseroptischen Steckverbindungssystemen in unterschiedlichen Ausprägungen (z.B. LC, ST und MPO etc.). Es sind ebenfalls steckbare Kreuzverbindungssysteme bekannt, wie beispielsweise aus den Patentschriften DE 10 2011 008 122, US 5,412,506 und DE 10 2016 011 751 zu entnehmen ist Aus den Patentschriften US 2015/295655, US 2015/230007, US 2010/254703, US 9,363,208 und WO 2017/013875 sind weitere faseroptische Kreuzverbindungssysteme bekannt.

Bei den existierenden faseroptischen Verbindungssystemen muss - für die Gewährleitung von Hochverfügbarkeit - die Anzahl der eingesetzten elektro-optischen Transceiver zur Erzeugung von Redundanz verdoppelt werden, um den Ausfall eines Transceivers ad hoc kompensieren zu können. Dies stellt einen erheblichen monetären Aufwand bei der Beschaffung und einen konzeptionellen Aufwand bei der Planung des Raumbedarfs solcher Systeme dar. Des Weiteren werden durch den Betrieb dieser "Backup-Transceiver" erhebliche Energiekosten produziert sowie die Energiebilanz belastet.

DIE ERFINDUNG

Aufgabe der Erfindung ist es, die Verwendung eines Kreuzverbindungsystems der eingangs genannten Art anzugeben, welches die oben geschilderten Nachteile nicht aufweist und insbesondere eine inhärente Redundanz der elektro-optischen Multikanaltransceiver auch für Umgebungen mit hohem Ausfallrisiko (harsh environment) zu erzeugen.

Diese Aufgabe wird durch die Verwendung eines faseroptischen Kreuzverbindungssystems mit den Merkmalen des Anspruchs 1 gelöst. Vorteilhafte Ausführungsformen finden sich in den Unteransprüchen.

Mit Hilfe des insbesondere steckbaren faseroptischen Kreuzverbindungssystems, bei welchem dann bevorzugt die Verbindungen der eingangsseitigen und/oder ausgangsseitigen Multikanaltransceiver steckbar ausgebildet sind, können die Einzelkanäle eines Multikanal-Transceivers derart gemischt werden, dass hierdurch eine inhärente Redundanz durch die internen, insbesondere in einer Verbindungseinrichtung, gekreuzten optischen Kanäle erzeugt wird. Dadurch ist das System in der Lage, im sogenannten Split-Modus der Multikanal-Transceiver Ausfälle der Transceiver anteilig zu kompensieren.

Als wesentlicher Vorteil der beschriebenen faseroptischen Kreuzverbindung wird die ermöglichte Reduzierung der erforderlichen Transceiver gesehen, d.h. im Vergleich zur konventionellen redundanten Kreuzverbindung - ohne interne Mischung der faseroptischen Transceiverkanäle - wird nur noch die Hälfte der Anzahl an Transceivern benötigt, um eine vergleichbare Redundanz bei Ausfall der Multikanaltransceiver zu erzeugen.

Die insbesondere steckbare Verbindung wird bevorzugt dadurch hergestellt, dass der wenigstens eine oder die Mehrzahl Eingangsswitch(e) über eine Verbindungseinrichtung mit der Mehrzahl Ausgangsswitche verbunden ist/sind. Die Anzahl der entsprechenden Kanaleingänge der Verbindungseinrichtung richtet sich dabei nach der Kanalzahl der Multikanaltransceiver. Bevorzugt ist dabei vorgesehen, dass die Verbindungseinrichtung für jeden angeschlossenen eingangsseitigen Multikanaltransceiver eine Anzahl von k Verbindungsanschlüssen aufweist, wobei k die Anzahl der faseroptischen Kanäle je eingangsseitigem Multikanaltransceiver bezeichnet. Die Verbindungseinrichtung sorgt für die erfindungsgemäße Aufteilung bzw. das Splitten der Kanäle jedes eingangsseitigen Transceivers und entsprechend für das wieder zusammenführen auf der Ausgangsseite.

Auch ausgangsseitig ist bevorzugt vorgesehen, dass die Verbindungseinrichtung für jeden angeschlossenen ausgangsseitigen Multikanaltransceiver eine Anzahl von k Kanalausgänge aufweist, wobei k die Anzahl der faseroptischen Kanäle je eingangsseitigem Multikanaltransceiver und/oder ausgangsseitigen Multikanaltransceiver bezeichnet.

Die Kanaleingänge und/oder Kanalausgänge können z.B. in LC-, ST- oder MPO-Steckeraufnahmen vorgesehen sein. In jeder Steckeraufnahme finden sich dann bevorzugt k Kanaleingänge und/oder Kanalausgänge, die nach der erfindungsgemäßen Kreuzverbindung miteinander innerhalb der Verbindungseinrichtung verschaltet sind.

Der Ausfall eines Multikanaltransceivers in einem Eingangsswitch bzw. Spine-Switch bewirkt z.B. durch die erfindungsgemäßen Verwendung der Kreuzverbindung lediglich eine 25%-Reduktion der gesamten Bandbreite (anstatt 100% Bandbreitenverlust bei konventioneller Ankopplung). Hierdurch kann eine Reduktion der benötigten Transceivermodule für die benötigte Redundanz erreicht werden, bzw. eine inhärente Redundanz mit deutlich weniger Transceivern erreicht werden. Der Erfindungsgedanke umfasst insbesondere die inhärente Redundanzerzeugung in modernen Spine-Leaf-Topologien in Data Centern. Dies wird erreicht durch die Kombination einer bevorzugt steckbaren, faseroptischen Kreuzverbindung mit dem sogenannten "Split-Modus" kommerzieller Mehrkanaltransceiver und eignet sich insbesondere für Hochleistungsdatenverbindungen im hohen Gbps-Bereich.

Die erfindungsgemäße Verwendung der, bevorzugt steckbaren, Kreuzverbindung vermischt die einzelnen faseroptischen Kanäle der Mehrkanaltransceiver mit einer Kanalanzahl k modular. Dadurch wird erreicht, dass der potentielle Ausfall eines Mehrkanaltransceivers lediglich zu einer Bandbreitenreduktion um den Faktor 1/k, statt zu einem vollen Bandbreitenausfall in der konventionellen Realisierung - führt.

Dies wird ermöglicht, indem die Kanäle der einzelnen im Eingangsswitch vorhandenen Transceiver zuerst aufgeteilt, dann über die Anzahl der angeschlossenen Endgeräte bzw. Ausgangsswitche gekreuzt und danach wieder zusammengeführt werden. Hierdurch wirkt sich ein Transceiverausfall mit k-Kanälen lediglich zum 1/k ten-Teil auf das Gesamtsystem aus.

So ist es möglich, die erforderliche systemische Redundanz der elektrooptischen Transceiver anstatt durch eine Dopplung der Bauteile mit signifikant weniger Transceivern zu realisieren.

In einer Spine-Leaf-Konstallation mit n Spine-Switchen und m Leaf-Switchen beträgt die Anzahl der faseroptischen Verbindungen A für das System:

$$A = mn$$

Mit je zwei Transceivern pro Verbindung beträgt die Anzahl der benötigten Transceiver N im konventionellen Redundanzschema (Verdopplung):

$$N_1 = 4mn$$

Aufgrund der erfindungsgemäßen Verwendung beträgt die Anzahl der benötigten k-Kanal-Transceiver für dieselbe Redundanz:

$$N_2 = 2m\left(n + \left\lceil\frac{n}{k}\right\rceil\right)$$

Für einen 4-Kanal-Transceiver (k = 4) erhält man dann:

$$N_2 = 2m\left(n + \left\lceil\frac{n}{4}\right\rceil\right)$$

Die Differenz der Anzahl der benötigten Transceiver berechnet sich somit zu

$$\Delta N = N_1 - N_2 = 2m\left(n - \left\lceil\frac{n}{4}\right\rceil\right)$$

Dieser Zusammenhang führt zu einer linearen Zunahme des absoluten Einsparpotentials in Abhängigkeit von n und m. Exemplarisch sei ΔN für folgende Konstellationen berechnet:

| n | m | ΔN |
|---|---|----|
| 2 | 2 | 4  |
| 2 | 6 | 12 |
| 3 | 6 | 24 |
| 6 | 8 | 64 |

Durch die Kreuzverbindung der angeschlossenen Transceiver entsteht eine Verbindungskombination der Transceiverkanäle auf Eingangs- bzw. Ausgangsseite oder Spine- bzw. Leafseite, welche den jeweiligen Anteil jedes Transceivers an der Gesamtbandbreite minimiert. Dies minimiert folglich ebenfalls die Wirkung eines Ausfalls des jeweiligen Transceivers.

Das Kreuzverbindungssystem ist, wie oben dargelegt, beliebig skalierbar. Die Gesamtanzahl $N_2$ der benötigten eingangsseitigen und ausgangsseitigen Multikanaltransceiver beträgt daher bevorzugt

$$N_2 = 2m\left(n + \left\lceil\frac{n}{k}\right\rceil\right).$$

In praktischen Anwendungen sind derzeit Multikanaltransceiver mit 4 Kanälen Stand der Technik. Bevorzugt ist daher vorgesehen, dass für die Anzahl faseroptischer Kanäle je eingangsseitigem und/oder ausgangsseitigem Multikanaltransceiver gilt: k = 4.

KURZBESCHREIBUNG DER ZEICHNUNGEN

Die Erfindung wird nachfolgend anhand der Figuren 1 - 5 noch näher erläutert. Der Fachmann wird erkennen, dass das System mit beliebig vielen Switchen bzw. Multikanaltransceivern ausgestattet bzw. eskaliert werden kann.

Figur 1 - zeigt ein Schema eines konventionellen, faseroptischen Kreuzverbindungssystems für zwei Spine- auf vier Leafswitche mit redundanten optischen Kanälen,

Figur 2 - zeigt ein Schema eines faseroptischen Kreuzverbindungssystems für zwei Spine- auf vier Leafswitche mit inhärenten redundanten Kanälen,

Figur 3 - zeigt ein Belegungsbeispiel für einen ersten Leaf-Quad-Blocks Kreuzverbindungssystem für den Anwendungsfall zwei Spine- auf vier Leafswitche,

Figur 4 - zeigt ein beispielhaftes Belegungsschema eines MPO12 Steckverbinders für Multikanaltransceiver,

Figur 5 - zeigt ein beispielhaftes Schema der erfindungsgemäßen Split-Verbindungen am Beispiel eines QSFP- Multikanaltransceivers.

## BESTER WEG ZUR AUSFÜHRUNG DER ERFINDUNG

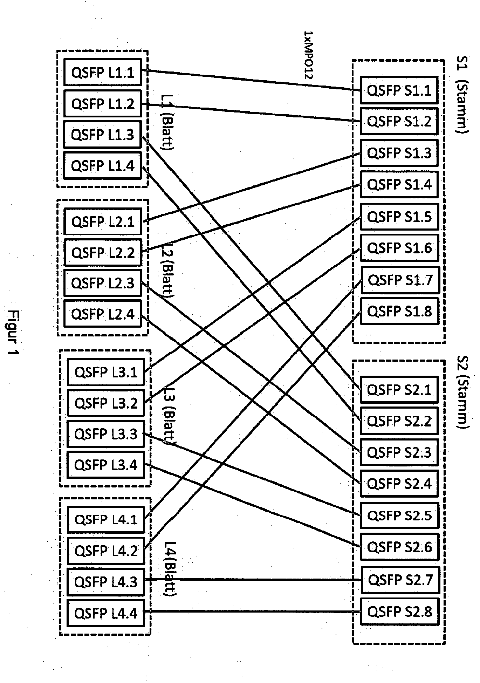

Wie in Figur 1 dargestellt, erfordert die konventionelle, redundante Auslegung, bei welcher für jeden Transceiver letztlich ein "Ersatztransceiver" zur Schaffung der Redundanz vorgehalten werden muss, beispielsweise für die abgebildete Spine-Leaf-Verbindungsstruktur mit 2 Spine- und 4 Leaf-Switchen eine Insgesamt 32 Multikanaltransceiver QSFP (z.B. QSFP28) mit beispielsweise je 4 internen faseroptischen Kanälen (Tx und Rx). Wird beispielsweise ein 100Gb/s-Übertragungssystem eingesetzt, transportieren die 4 internen Kanäle je 25 Gb/s und werden konventionell zu 100 Gb/s aggregiert.

Um den Ausfall eines QSFP zu kompensieren, werden die Spine-Switche mit je 2 QSFPs angeschlossen.

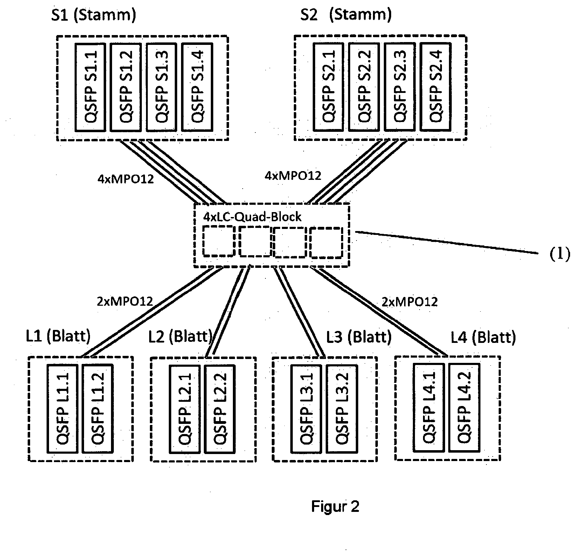

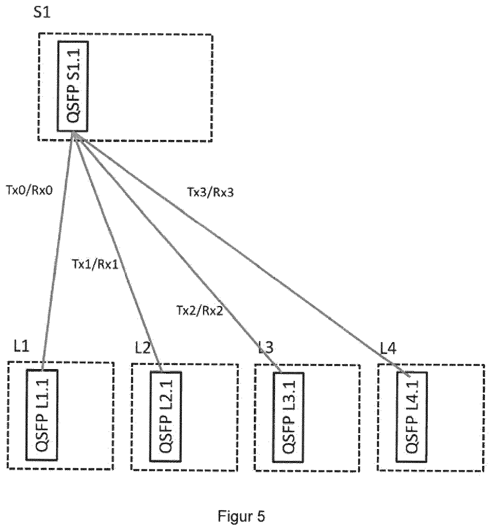

Mit dem vorgeschlagenen, insbesondere als Steckverbindungssystem ausgebildeten, Kreuzverbindungssystem, werden, wie das Beispiel der Figur 2 zeigt, die faseroptischen Kanäle der angeschlossenen Multikanaltransceiver QSFPx (x ist ein Platzhalter) durch die Verwendung des internen Split-Modus der QSFPs derart aufgeteilt, dass nicht alle, sondern nur ein Teil der internen Kanäle des QSFP auf das jeweilige Empfängergerät geschaltet wird. Das Aufteilen der vier Kanäle eines QSFP ist beispielhaft in Figur 5 dargestellt.

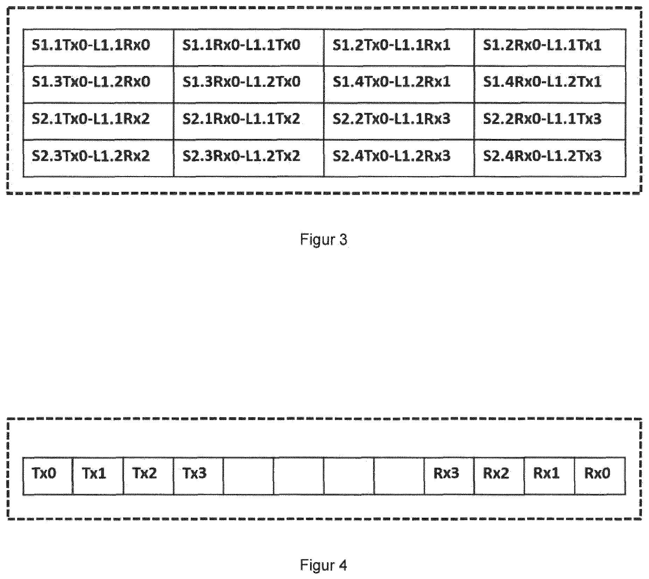

Durch die insbesondere steckbaren Faserverbindungen des vorgeschlagenen Steckverbindungssystems, welches in der Figur 2 eine Verbindungseinrichtung 1 umfasst, die die Eingangsswitche (hier auch Spineswitche genannt) mit den Ausgangsswitchen (hier auch Leafswitche genannt) verbindet, werden die Datenleitungen durch das in Figur 3 dargestellte Steckschema wieder zusammengemischt bzw. aggregiert, sodass die Gesamtdatenrate zum Empfängergerät geführt werden kann.

Die Realisierung der Steckverbindung aus der Figur 3 kann beispielsweise durch sogenannte LC Quad-Kupplungen erfolgen, die im gezeigten Beispiel als Verbindungseinrichtung dienen, wobei beispielsweise MPO-Steckelemente zur Ankopplung der einzelnen Kanäle an die Verbindungseinrichtung verwendet werden können, wie dies hier beispielhaft gezeigt ist.

Die Belegung eines MPO12-Steckelements ist in Figur 4 dargestellt. Mit dieser Standardbelegung werden die 4 internen Kanäle (Tx und Rx) des angeschlossenen QSFP durch das erfindungsgemäße System gemischt und erzeugen hierdurch die gewünschte inhärente Redundanz.

In der dargestellten Beispielanwendung führt dies zu einer Reduktion der Anzahl der QSFP von 50% bei anteilig erhaltener Redundanz der Datenrate. Die berechnete anteilige Redundanz der Datenrate steigt in dieser beispielhaften Konstellation durch die faseroptische Kanalmischung von 0% auf 50% bei den Leaf- Swichen und von 0% auf 75% bei den Spine-Switchen, da sich der Ausfall eines QSFP durch den internen Split-Modus lediglich zum entsprechenden Anteil auf die Gesamtdatenrate der Verbindung auswirkt.

Das vorgeschlagene Konzept der inhärenten Redundanz, lässt sich konsequent zu einer 100% Redundanzlösung weiterentwickeln. Hierzu wird - in der Beispielanwendung aus der Figur 2 - die Anzahl der verwendeten Multikanaltransceiver auf der Spineseite auf jeweils 6 QSFPs pro Spine und auf der Leafseite auf jeweils 3 QSFPs erhöht. Mit dieser Konstellation ist eine 100% Redundanz bei QSFP-Ausfall möglich, da die gekreuzten Kanäle der verbleibenden Multikanaltransceiver genutzt werden können, um die 100 Gb/s Datenrate zu liefern.

Als Resultat dieser Konstellation reduziert sich die benötigte Anzahl von Multikanal-Transceivern auf 75% der Anzahl eines konventionellen Verbindungssystems aus Figur 1.

## Patentansprüche

1. Verwendung eines faseroptischen Kreuzverbindungssystems zur Erzeugung einer Redundanz zur Kompensation von Ausfällen von Transceivern, wobei das faseroptische Kreuzverbindungssystem folgendes aufweist:

eine Eingangsseite (S1, S2) mit einem oder einer Mehrzahl (n) Eingangsswitche (S1, S2), wobei jeder Eingangsswitch (S1, S2) eine Mehrzahl faseroptische Multikanaltransceiver (QSFP S1.1-S1.4; QSFP S2.1-S2.4) umfasst, von denen jeder über eine Anzahl von k faseroptischen Kanäle (Tx0-Tx3) verfügt, und
eine Ausgangsseite (L1-L4) mit einer Mehrzahl (m) Ausgangsswitche (L1, L2, L3, L4), die jeweils eine Mehrzahl faseroptischer Multikanaltransceiver (QSFP L1.1-L1.2; QSFP L2.1-L2.2; QSFP L3.1-L3.2; QSFP L4.1-L4.2) aufweisen, wobei die faseroptischen Kanäle (Tx0-Tx3) wenigstens eines, insbesondere jedes, eingangsseitigen Multikanal-transceivers (QSFP S1.1-S1.4; QSFP S2.1-S2.4) aufgeteilt und mit voneinander verschiedenen, insbesondere zu verschiedenen Ausgangsswitchen (L1, L2, L3, L4) gehörenden, ausgangsseitigen Multikanaltransceivern (QSFP L1.1-L1.2; QSFP L2.1-L2.2; QSFP L3.1-L3.2; QSFP L4.1-L4.2) verbunden sind.

2. Verwendung nach Anspruch 1,

**dadurch gekennzeichnet,**
**dass** die Verbindungen der eingangsseitigen und/oder ausgangsseitigen Multikanaltransceiver (QSFP S1.1-S1.4; QSFP S2.1-S2.4; QSFP L1.1-L1.2; QSFP L2.1-L2.2; QSFP L3.1-L3.2; QSFP L4.1-L4.2) steckbar ausgebildet sind.

3. Verwendung nach Anspruch 1 oder 2,
**dadurch gekennzeichnet,**
**dass** der wenigstens eine oder die Mehrzahl (n) Eingangsswitch(e) (S1, S2) über eine Verbindungseinrichtung (1) mit der Mehrzahl (m) Ausgangsswitche (L1-L4) verbunden ist.

4. Verwendung nach Anspruch 3,
**dadurch gekennzeichnet,**
**dass** die Verbindungseinrichtung (1) für jeden angeschlossenen eingangsseitigen Multikanaltransceiver (QSFP S1.1-S1.4; QSFP S2.1-S2.4) eine Anzahl von k Kanaleingängen aufweist, wobei k die Anzahl der faseroptischen Kanäle je eingangsseitigem Multikanaltransceiver (QSFP S1.1-S1.4; QSFP S2.1-S2.4) bezeichnet.

5. Verwendung nach Anspruch 3 oder 4,
**dadurch gekennzeichnet,**
**dass** die Verbindungseinrichtung (1) für jeden angeschlossenen ausgangsseitigen Multikanaltransceiver (QSFP L1.1-L1.2; QSFP L2.1-L2.2; QSFP L3.1-L3.2; QSFP L4.1-L4.2) eine Anzahl von k Kanalausgängen aufweist, wobei k die Anzahl der faseroptischen Kanäle je eingangsseitigem Multikanaltransceiver (QSFP S1.1-S1.4; QSFP S2.1-S2.4) und/oder ausgangsseitigen Multikanaltransceiver (QSFP L1.1-L1.2; QSFP L2.1-L2.2; QSFP L3.1-L3.2; QSFP L4.1-L4.2) bezeichnet.

6. Verwendung nach Anspruch 4 oder 5,
**dadurch gekennzeichnet,**
**dass** die Kanaleingänge und/oder Kanalausgänge in LC-, ST- oder MPO-Steckeraufnahmen vorgesehen sind.

7. Verwendung nach einem der vorigen Ansprüche,
**dadurch gekennzeichnet,**
**dass** die Gesamtanzahl N2 der eingangsseitigen und ausgangsseitigen Multikanaltransceiver

$$N_2 = 2m\left(n + \left\lceil \frac{n}{k} \right\rceil\right)$$ beträgt.

8. Verwendung nach einem der vorigen Ansprüche,
**dadurch gekennzeichnet,**
**dass** für die Anzahl faseroptischer Kanäle je eingangsseitigem und/oder ausgangsseitigem Multikanaltransceiver gilt: k = 4.

9. Verwendung nach einem der vorigen Ansprüche, **dadurch gekennzeichnet,**
**dass** das faseroptische Kreuzverbindungssystem eine Spine-Leaf-Topologie aufweist, wobei die Ausgangsseite des faseroptischen Kreuzverbindungssystems die Leafseite und die Eingangsseite des faseroptischen Kreuzverbindungssystems die Spineseite ist.

**Claims**

1. Use of a fibre-optic cross-connection system for creating a redundancy for compensating failures in transceivers, wherein the fibre-optic cross-connection system comprises the following:

   an input side (S1, S2) with one or a plurality (n) of input switches (S1, S2) wherein each input switch (S1, S2) comprises a plurality of fibre-optic multi-channel transceivers (QSFP S1.1 - S1.4; QSFP S2.1-S2.4) of which each one has a number of k fibre-optic channels (Tx0-Tx3), and
   an output side (L1- L4) with a plurality (m) of output switches (L1, L2, L3, L4) which each comprise a plurality of fibre-optic multi-channel transceivers (QSFP L1.1 - L1.2); QSFP L2.1 - L2.2; QSFP L3.1 - L3.2; QSFP L4.1 - L4.2), wherein the fibre-optic channels (Tx0-Tx3) of at least one, in particular of each, input-side multi-channel transceiver (QSFP S1.1 - S1.4; QSFP S2.1-S2.4) are divided up and connected to output-side multi-channel transceivers (QSFP L1.1 - L1.2; QSFP L2.1 - L2.2; QSFP L3.1 - L3.2; QSFP L4.1 - L4.2), which are different from one another, in particular belonging to different output switches (L1, L2, L3, L4).

2. Use according to claim 1
   **characterised in that**
   the connections of the input-side and/or output-side multi-channel transceivers (QSFP S1.1 - S1.4; QSFP S2.1- S2.4; QSFP L1.1 - L1.2; QSFP L2.1 - L2.2; QSFP L3.1 - L3.2; QSFP L4.1 - L4.2) have a plug-in configuration.

3. Use according to claim 1 or 2
   **characterised in that**
   the at least one or the plurality (n) of input switches (S1, S2) is/are connected to the plurality (m) of output switches (L1-L4) via a connecting device (1).

4. Use according to claim 3
   **characterised in that**
   the connecting device (1) for each attached input-side multi-channel transceiver (QSFP S1.1 - S1.4; QSFP S2.1 - S2.4) has a number of k channel inputs wherein k designates the number of fibre-optic channels per each input-side multi-channel transceiver (QSFP S1.1 - S1.4; QSFP S2.1 - S2.4) .

**5.** Use according to claim 3 or 4
**characterised in that**
the connecting device (1) for each attached output-side multi-channel transceiver (QSFP L1.1 - L1.2); QSFP L2.1 - L2.2; QSFP L3.1 - L3.2; QSFP L4.1 - L4.2) has a number of k channel outputs wherein k designates the number of fibre-optic channels per input-side multi-channel transceiver (QSFP S1.1 - S1.4; QSFP S2.1 - S2.4) and/or output- side multi-channel transceiver (QSFP L1.1 - L1.2; QSFP L2.1 - L2.2; QSFP L3.1 - L3.2; QSFP L4.1 - L4.2).

**6.** Use according to claim 4 or 5
**characterised in that**
the channel inputs and/or the channel outputs are provided in LC, ST or MPO plug sockets.

**7.** Use according to one of the preceding claims
**characterised in that**
the overall number N2 of the input-side and output-side multi-channel transceivers is

$$N_2 = 2m\left(n + \left[\frac{n}{k}\right]\right).$$

**8.** Use according to one of the preceding claims
**characterised in that**
k = 4 applies for the number of fibre-optic channels per input-side and/or output-side multi-channel transceiver.

**9.** Use according to one of the preceding claims
**characterised in that**
the fibre-optic cross-connection system comprises a spine leaf topology wherein the output side of the fibre-optic cross-connection system is the leaf side and the input side of the fibre-optic cross-connection system is the spine side.

**Revendications**

**1.** Utilisation d'un système de connexion croisée à fibres optiques pour la génération d'une redondance pour la compensation des défaillances des émetteurs-récepteurs, dans lequel le système de connexion croisée à fibres optiques comporte le suivant :

un côté d'entrée (S1, S2), pourvu d'un commutateur d'entrée (S1, S2) ou d'une pluralité (n) de commutateurs d'entrée (S1, S2), dans lequel chaque commutateur d'entrée (S1, S2) comprend une pluralité d'émetteurs-récepteurs multicanaux à fibres optiques (QSFP S1.1-S1.4;

QSFP S2.1-S2.4), dont chacun dispose d'un nombre k de canaux à fibres optiques (Tx0-Tx3), et

un côté de sortie (L1-L4), pourvu d'une pluralité (m) de commutateurs de sortie (L1, L2, L3, L4), qui comportent chacun une pluralité d'émetteurs-récepteurs multicanaux à fibres optiques (QSFP L1.1-L1.2; QSFP L2.1-L2.2 ; QSFP L3.1-L3.2 ; QSFP L4.1-L4.2), dans lequel les canaux à fibres optiques (Tx0-Tx3) d'au moins un émetteur-récepteur multicanal du côté d'entrée (QSFP S1.1-S1.4 ; QSFP S2.1-S2.4), en particulier de chaque émetteur-récepteur multicanal du côté d'entrée (QSFP S1.1-S1.4 ; QSFP S2.1-S2.4) sont divisés et connectés à des émetteurs-récepteurs multicanaux du côté de sortie (QSFP L1.1-L1.2 ; QSFP L2.1-L2.2 ; QSFP L3.1-L3.2 ; QSFP L4.1-L4.2) différents les uns des autres, en particulier appartenant à des différents commutateurs de sortie (L1, L2, L3, L4).

**2.** Utilisation selon la revendication 1,
**caractérisé en ce**
**que** les connexions des émetteurs-récepteurs multicanaux du côté d'entrée et/ou des émetteurs-récepteurs multicanaux du côté de sortie (QSFP S1.1-S1.4; QSFP S2.1-S2.4; QSFP L1.1-L1.2 ; QSFP L2.1-L2.2 ; QSFP L3.1-L3.2 ; QSFP L4.1-L4.2) sont formées de manière enfichable.

**3.** Utilisation selon la revendication 1 ou 2,
**caractérisé en ce**
**que** l'au moins un commutateur d'entrée (S1, S2) ou la pluralité (n) de commutateurs d'entrée (S1, S2) est connecté avec la pluralité (m) de commutateurs de sortie (L1 à L4) par un dispositif de connexion (1).

**4.** Utilisation selon la revendication 3,
**caractérisé en ce**
**que** le dispositif de connexion (1) comporte pour chaque émetteur-récepteur multicanal du côté d'entrée connecté (QSFP S1.1-S1.4 ; QSFP S2.1-S2.4) un nombre k d'entrées de canaux, dans lequel k décrit le nombre de canaux à fibres optiques par émetteur-récepteur multicanal du côté d'entrée (QSFP S1.1-S1.4 ; QSFP S2.1-S2.4).

**5.** Utilisation selon la revendication 3 ou 4,
**caractérisé en ce**
**que** le dispositif de connexion (1) pour chaque émetteur-récepteur multicanal du côté de sortie connecté (QSFP L1.1-L1.2 ; QSFP L2.1-L2.2 ; QSFP L3.1-L3.2; QSFP L4.1-L4.2) comporte un nombre k de sorties de canaux, dans lequel k décrit le nombre de canaux à fibres optiques par émetteur-récepteur multicanal du côté d'entrée (QSFP S1.1-S1.4 ; QSFP S2.1-S2.4) et/ou par émetteur-récepteur multicanal du côté de sortie (QSFP L1.1-L1.2 ; QSFP L2.1-L2.2 ; QSFP L3.1-L3.2; QSFP L4.1-L4.2) .

6. Utilisation selon la revendication 4 ou 5, **caractérisé en ce que** les entrées de canaux et/ou les sorties de canaux sont prévues en supports de fiches LC, ST ou MPO.

7. Utilisation selon l'une quelconque des revendications précédentes, **caractérisé en ce que** le nombre total N2 d'émetteurs-récepteurs multicanaux du côté d'entrée et d'émetteurs-récepteurs multicanaux du côté de sortie est

$$N_2 \; = \; 2m \; (n \; + \; [ \; \tfrac{n}{k} ] ) .$$

8. Utilisation selon l'une quelconque des revendications précédentes, **caractérisé en ce que** pour le nombre de canaux à fibres optiques par émetteur-récepteur multicanal du côté d'entrée et/ou émetteur-récepteur multicanal du côté de sortie la valeur suivante est valable: k = 4.

9. Utilisation selon l'une quelconque des revendications précédentes, **caractérisé en ce que** le système de connexion croisée à fibres optiques comporte une topologie *Spine-Leaf,* dans laquelle le côté de sortie du système de connexion croisée à fibres optiques est le côté de *Leaf,* et le côté d'entrée du système de connexion croisée à fibres optiques est le côté de *Spine.*

Figur 1

S1 (Stamm)    S2 (Stamm)

QSFP S1.1  QSFP S1.2  QSFP S1.3  QSFP S1.4

QSFP S2.1  QSFP S2.2  QSFP S2.3  QSFP S2.4

4xMPO12    4xMPO12

4xLC-Quad-Block

(1)

2xMPO12    2xMPO12

L1 (Blatt)    L2 (Blatt)    L3 (Blatt)    L4 (Blatt)

QSFP L1.1  QSFP L1.2

QSFP L2.1  QSFP L2.2

QSFP L3.1  QSFP L3.2

QSFP L4.1  QSFP L4.2

Figur 2

| S1.1Tx0-L1.1Rx0 | S1.1Rx0-L1.1Tx0 | S1.2Tx0-L1.1Rx1 | S1.2Rx0-L1.1Tx1 |
| S1.3Tx0-L1.2Rx0 | S1.3Rx0-L1.2Tx0 | S1.4Tx0-L1.2Rx1 | S1.4Rx0-L1.2Tx1 |
| S2.1Tx0-L1.1Rx2 | S2.1Rx0-L1.1Tx2 | S2.2Tx0-L1.1Rx3 | S2.2Rx0-L1.1Tx3 |
| S2.3Tx0-L1.2Rx2 | S2.3Rx0-L1.2Tx2 | S2.4Tx0-L1.2Rx3 | S2.4Rx0-L1.2Tx3 |

Figur 3

| Tx0 | Tx1 | Tx2 | Tx3 | | | | | Rx3 | Rx2 | Rx1 | Rx0 |

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011008122
- US 5412506 A
- DE 102016011751
- US 2015295655 A
- US 2015230007 A
- US 2010254703 A
- US 9363208 B
- WO 2017013875 A